## Europäisches Patentamt

## European Patent Office

## Office européen des brevets

(11) Veröffentlichungsnummer: **0 266 537**
**A1**

# (12) EUROPÄISCHE PATENTANMELDUNG

(21) Anmeldenummer: 87113952.3

(22) Anmeldetag: 24.09.87

(51) Int. Cl.4: **B60R 22/38**

(30) Priorität: 23.10.86 DE 3636073

(43) Veröffentlichungstag der Anmeldung:
11.05.88 Patentblatt 88/19

(84) Benannte Vertragsstaaten:
AT DE ES FR GB IT SE

(71) Anmelder: AUTOLIV GmbH
Otto-Hahn-Strasse 4
D-2200 Elmshorn(DE)

(72) Erfinder: Heller, Dieter
Havighorster Weg 12
D-2308 Honigsee(DE)
Erfinder: Essler, Karl-Hermann
Koppeldamm 20
D-2082 Tornesch(DE)
Erfinder: Kock, Hans-Otto
Oersdorfer Stieg 13
D-2358 Kaltenkirchen(DE)
Erfinder: Lacher, Bernd
Dorfstrasse 40
D-2216 Agethorst(DE)
Erfinder: Ritterdorf, Udo
Hasloher Weg 22
D-2087 Bönningstedt(DE)

(74) Vertreter: Weber, Dieter, Dr. et al
Dr. Dieter Weber und Klaus Seiffert
Patentanwälte Gustav-Freytag-Strasse 25
Postfach 6145
D-6200 Wiesbaden 1(DE)

(54) Gurtbandsensitives System mit einer massebehafteten Steuerklinke.

(57) Gurtbandsensitives System für Gurtaufroll-schnellsperrautomaten, welche eine Wickelwelle mit aufgewickeltem Gurtband, eine beweglich angeordnete Blockierklinke mit einem Blokkierzahnrad und ein konzentrisch zur Wickelachse gelagertes Steuerteil mit einer um die Wickelachse frei drehbaren Arretierantriebsscheibe (5) mit Innenverzahnung (5d) aufweisen, wobei das gurtbandsensitive System aus einer im Abstand zur Wickelachse drehbar gelagerten Klinke und einer die Klinke bei übermäßiger Gurtbandbeschleunigung auslenkenden Drehträgheitsmasse besteht.

Damit ein solches System in seinem Aufbau deutlich einfacher und deshalb auch leichter zu montieren und preiswerter herzustellen ist, wird erfindungsgemäß vorgesehen, daß die Klinke eine mit der Drehträgheitsmasse fest verbundene Trägheitsklinke (10) ist.      Fig. 3

## Gurtbandsensitives System mit einer massebehafteten Steuerklinke

Die Erfindung betrifft ein gurtbandsensitives System für Gurtaufrollschnellsperrautomaten, welche im wesentlichen eine Wickelwelle mit aufgewickeltem Gurtband, eine beweglich angeordnete Blockierklinke mit einem Blockierzahnrad und ein konzentrisch zur Wickelachse gelagertes Steuerteil mit einer um die Wickelachse frei drehbaren Arretierantriebsscheibe mit Innenverzahnung aufweisen, wobei das gurtbandsensitive System aus einer im Abstand zur Wickelachse drehbar gelagerten Klinke und einer die Klinke bei übermäßiger Gurtbandbeschleunigung auslenkenden Drehträgheitsmasse besteht.

Derartige gurtbandsensitive Systeme sind bekannt. Während das Lager der Klinke dabei drehfest mit der Wickelwelle verbunden ist, ist die Trägheitsmasse gegenüber der Wickelwelle drehbar gelagert, wird jedoch bei geringen Winkelbeschleunigungen, beispielsweise durch eine Feder, welche an der Drehträgheitsmasse einerseits und an einem drehfest mit der Wickelwelle verbundenen Teil andererseits angreift, bei Drehungen der Wickelwelle mitgeführt. Sobald die Winkelbeschleunigung der Wickelwelle jedoch einen bestimmten Grenzwert überschreitet, bei dem die aufgrund des Trägheitsmomentes der Drehträgheitsmasse auf die Mitnehmerfeder ausgeübte Kraft zur Dehnung der Feder führt, bleibt die Drehträgheitsmasse hinter der Drehbewegung der Wickelwelle zurück und stößt mit geeignet ausgebildeten Steuerteilen an entsprechende Steuerflächen der Klinke an, so daß diese aus ihrer Ruheposition herausbewegt und um ihren Lagerpunkt geschwenkt wird und in die Innenverzahnung einer Arretierantriebsscheibe eingreift. Da das Lager (Lagerzapfen oder ähnliches) der Klinke drehfest mit der Wikkelwelle verbunden ist, wird beim Eingriff der Klinke in die Innenverzahnung der Arretierantriebsscheibe diese drehend mitgeführt und steuert beispielsweise über einen in einer Steuerkurve geführten Zapfen der Blockierklinke diese in das Blockierzahnrad ein, wodurch die weitere Drehbewegung der Wickelwelle gestoppt wird.

Die Drehträgheitsmasse ist bei allen bekannten System von der Klinke getrennt und außerdem bezüglich der Wickelwelle drehbar gelagert, so daß das gurtbandsensitive System aus mindestens drei verschiedenen Teilen besteht, nämlich der Klinke, der Drehträgheitsmasse und einer Mitnehmereinrichtung, welche beispielsweise auch eine Rutschkupplung sein kann, und welche bei nur geringen Gurtbandbeschleunigungen die Drehträgheitsmasse drehend mit der Wickelwelle mitführt.

Außerdem ist die Drehträgheitsmasse im allgemeinen weitgehend symmetrisch bezüglich der Wickelachse ausgebildet, um ein möglichst gleichmäßiges Ansprechverhalten des Systems zu erreichen, welches unabhängig von der Lage der Drehträgheitsmasse ist, auf welche außer den Trägheitskräften auch immer die Schwerkraft wirkt.

Die Lagerung eines zusätzlichen, bezüglich der Wickelwelle frei verdrehbaren Teiles wie der Drehträgheitsmasse und die Anbringung eines geeigneten Mitnehmersystems tragen zu einer weiteren Verkomplizierung der ohnehin recht aufwendigen Sperrautomatik bei.

Demgegenüber liegt der vorliegenden Erfindung die Aufgabe zugrunde, ein gurtbandsensitives System für Gurtaufrollschnellsperrautomaten mit den eingangs genannten Merkmalen zu schaffen, welches in seinem Aufbau deutlich einfacher und deshalb auch leichter zu montieren und preiswerter herzustellen ist.

Diese Aufgabe wird dadurch gelöst, daß die Steuerklinke eine mit der Drehträgheitsmasse fest verbundene Trägheitsklinke ist.

Eine derartige Trägheitsklinke vereinigt die Funktionen der Drehträgheitsmasse und der Steuerklinke in einem Teil. Es hat sich nämlich gezeigt, daß der Widerstand gegen eine Winkelbeschleunigung, d.h. gegen eine schnellere Drehung der Drehträgheitsmasse bezüglich ihres Schwerpunktes unabhängig davon ist, ob die Drehträgheitsmasse im wesentlichen konzentrisch zur Wickelachse angeordnet ist, so daß die Wickelachse praktisch durch den Schwerpunkt der Drehträgheitsmasse verläuft, oder ob die Drehträgheitsmasse bezüglich einer anderen Lagerstelle drehbar gelagert ist, beispielsweise also um dieselbe Achse drehbar gelagert ist wie auch die Steuerklinke. Dabei liegt dann im allgemeinen auch der Schwerpunkt der Trägheitsmasse im Abstand von der Wickelachse.

Die fest mit der Drehträgheitsmasse verbundene Klinke, die nach wie vor um ihre Lagerstelle, welche mit der Wickelwelle drehfest verbunden ist, drehbar gelagert ist, bildet dann die Trägheitsklinke, welche bei übermäßiger Gurtbandbeschleunigung aufgrund ihres eigenen Trägheitsmomentes einer Beschleunigung der Drehung um ihre eigene Schwerpunktachse Widerstand entgegensetzt und somit aus ihrer Normalposition bezüglich der Wickelwelle herausschwenkt und mit einem entsprechend ausgebildeten Vorsprung in die Innenverzahnung einer Arretierantriebsscheibe eingreift.

Dabei ist erfindungsgemäß vorgesehen, daß die Trägheitsklinke durch eine Rückhaltefeder in ihrer normalen Position gehalten wird.

Die normale Position ist dadurch definiert, daß die Trägheitsklinke um ihre Lagerstelle soweit nach innen verschwenkt ist, daß se nicht in die Verzahnung der Arretierantriebsscheibe eingreift, so daß die Wickelwelle mit den daran bezüglich der Wickelachse drehfest angebrachten Teilen inklusive der Trägheitsklinke gegenüber der Arretierantriebsscheibe frei drehbar ist.

Die Rückhaltefeder entspricht dem bereits erwähnten Mitnehmersystem für die Drehträgheitsmasse, durch die Vereinigung der Drehträgheitsmasse mit der Steuerklinke zu einer Trägheitsklinke ist jedoch nach wie vor eine wesentliche Vereinfachung gegenüber den herkömmlichen Systemen gegeben, da die eigene Ausbildung und Lagerung einer Drehträgheitsmasse entfällt.

Die Rückhaltefeder ist in ihrer Stärke sowohl dem Trägheitsmoment der Trägheitsklinke als auch der gewünschten Grenzwinkelbeschleunigung angepaßt, bei welcher die Trägheitsklinke auf jeden Fall in die Innenverzahnung der Arretierantriebsscheibe eingreifen soll. Durch geschickte Anordnung der Feder bzw. ihrer Angriffspunkte bezüglich der Lagerstelle der Trägheitsklinke kann man dabei erreichen, daß das auf die Trägheitsklinke wirkende Drehmoment mit wachsender Auslenkung der Trägheitsklinke entweder zunimmt, im wesentlichen konstant bleibt oder abnimmt.

Ist beispielsweise die Feder als Zugfeder ausgebildet und verläuft die Verbindungslinie zwischen Lagerstelle und Angriffspunkt der Feder an der Trägheitsklinke im wesentlichen senkrecht zur Richtung der Feder bzw. zur Verbindungslinie ihrer beiden Angriffspunkte, so nimmt bei einer Auslenkung der Trägheitsklinke aus ihrer Normalposition das rücktreibende Drehmoment wegen der Verlängerung der Feder und der damit zunehmenden Federkraft bei einem im wesentlichen gleichbleibenden wirksamen Hebel bezüglich der Lagerstelle zu. Schließen die genannten Linien einen Winkel von etwa 45° miteinander ein, so wird beim Herausschwenken der Trägheitsklinke aus ihrer Normalposition der wirksame Hebel bezüglich der Lagerstelle etwa um den gleichen Betrag verkürzt, um welchen sich die Feder verlängert, so daß man durch eine solche Anbringung erreichen kann, daß das rücktreibende Drehmoment auf die Trägheitsklinke, welche insgesamt nur um einen relativ kleinen Winkel von etwa 10 bis 20° verschwenkt werden muß, um in die Verzahnung der Arretierantriebsscheibe einzugreifen, während ihres Herausschwenkensim wesentlichen konstant bleibt.

Verkleinert man dagegen den Winkel zwischen den genannten Verbindungslinien noch weiter, so wird beim Herausschwenken der Trägerklinke der wirksame Hebel bezüglich der Lagerstellen stärker verkürzt als die Dehnung der Feder zunimmt, so daß mit einer solchen Anordnung erreicht werden kann, daß das rücktreibende Drehmoment während des Herausschwenkens der Feder sogar abnimmt. Grundsätzlich lassen sich derartige Drehmomentcharakteristiken mit verschiedenen Mitteln erzielen, wie beispielsweise durch die Verwendung von Magneten anstelle von Federn, durch die Auswahl bestimmter Federmaterialien oder mit Hilfe von mechanischen Führungen.

In einer bevorzugten Ausführungsform der Erfindung ist vorgesehen, daß die Rückhaltefeder eine Spiralfeder ist.

Eine solche Spiralfeder wird zweckmäßigerweise konzentrisch zur Lagerstelle der Trägheitsklinke angebracht, so daß die oben erwähnten geometrischen Überlegungen keine Rolle mehr spielen und das rücktreibende Drehmoment hängt ausschließlich von den Federeigenschaften ab.

Weiterhin ist eine Ausführunsform der Erfindung bevorzugt, bei welcher die Trägheitsklinke auf einem Steuerzahnrad mit Außenverzahnung gelagert ist.

Ein derartiges Steuerzahnrad mit Außenverzahnung dient im allgemeinen zur Kraftübertragung von der Wickelwelle auf die Arretierantriebsscheibe, wenn ein Sensor, welcher im wesentlichen auf lineare Beschleunigungen (inklusive Schwerkraft) reagiert, ebenfalls über eine Klinke die Verbindung zwischen der Außenverzahnung des Steuerzahnrades und der Arretierantriebsscheibe herstellt. Das Steuerzahnrad ist zu diesem Zweck drehfest mit der Wikelwelle verbunden, so daß auch die drehfeste Verbindung zwischen der Lagerstelle der Trägheitsklinke und der Wickelwelle gewähr leistet ist.

Als zweckmäßig erweist es sich, wenn erfindungsgemäß die Trägheitsklinke einstückig ausgebildet ist.

Dabei sind Klinke und Drehträgheitsmasse identisch. Eine solche Klinke läßt sich einfach und preiswert herstellen und im Vergleich zu der Montage getrennter Drehträgheitsmassen und Klinken auch wesentlich einfacher montieren. Die Trägheitsklinke kann als Guß-, Stanz-oder Formstück hergestellt sein.

Dabei kann es von Vorteil sein, wenn gemäß der Erfindung die Trägheitsklinke außerhalb ihres Schwerpunktes drehbar gelagert ist und wenn in Abwickelrichtung gesehen der Schwerpunkt vor dem Drehpunkt der Trägheitsklinke (Lagerstelle) liegt und einen größeren Abstand zur Wickelachse hat als der Drehpunkt.

Bei einer Lagerung der Trägheitsklinke außerhalb des Schwerpunktes ist das Gesamtträgheitsmoment der Klinke immer größer als bei einer Lagerung im Schwerpunkt, so daß eine so gelagerte Klinke leichter ausgelenkt wird oder aber bei einem gleichen Grenzwert für die Winkelbeschleunigung kleiner und leichter ausgeführt werden kann. Zur Auslenkung der Klinke trägt bei einer solchen Ausführungsform auch zusätzlich die Zentrifugalkraft bei, welche beim Drehen der Wickelwelle wirksam wird, so daß eine solche Trägheitsklinke nicht nur bei übermäßiger Gurtbandbeschleunigung, sondern gegebenenfalls auch bei übergroßer Gurtbandgeschwindigkeit (in Abwickelrichtung) ausgelenkt werden kann. Dabei ist jedoch die relative Anordnung von Lagerstelle und Schwerpunkt bezüglich der Wickelachse und der Abwickelrichtung zu beachten, da bei anderen Lagerungen Drehmomente auftreten können, welche dem Beharrungsvermögen der Trägheitsklinke, das mit ihrer Drehimpulserhaltung zusammenhängt, gerade entgegenwirken.

Um die Auslenkung in Abhängigkeit von der Gurtbandgeschwindigkeit zu vermeiden, welche in Sonderfällen durchaus erwünscht sein kann, ist in der bevorzugten Ausführungsform der Erfindung vorgesehen, daß die Trägheitsklinke um ihren Schwerpunkt leicht drehbar gelagert ist.

Bei einer Lagerung im Schwerpunkt hat die Zentrifugalkraft keinen Einfluß auf eine Drehung der Trägheitsklinke bezüglich ihrer Lagerung. Ohne die Einwirkung äußerer Kräfte behält die Trägheitsklinke ihren Drehimpuls bei. Kräfte werden jedoch ausgeübt auf die Trägheitsklinke von ihrer Lagerstelle aus, welche beispielsweise aus einem Zapfen bestehen kann, der in eine entsprechende, zum Schwerpunkt der Trägheitsklinke symmetrische Bohrung eingreift, sowie von der Rückhaltefeder. Das von diesen beiden Punkten aus auf die Trägheitsklinke ausgeübte Drehmoment hängt ab von der Stärke und Anordnung der Feder und, im Falle einer Lagerung symmetrisch zum Schwerpunkt von der Reibung im Lager. Solange die Wickelwelle ruht oder mit konstanter Geschwindigkeit dreht, wird kein Drehmoment auf die Klinke übertragen; wird jedoch die Wickelwelle beschleunigt gedreht, so muß, wenn die Trägheitsklinke nicht aus ihrer Normallage herausschwenken soll, ein Drehmoment übertragen werden, welches ausschließlich von der Winkelbeschleunigung und dem Trägheitsmoment der Trägheitsklinke abhängt. Dabei ist zu beachten, daß die Winkelbeschleunigung der Trägheitsklinke bezüglich ihrer Lagerstelle dieselbe ist wie die Winkelbeschleunigung der Wickelwelle, solange die Trägheitsklinke sich nicht aus ihrer Normalposition herausbewegt.

Das Drehmoment, welches durch die Lagerstelle übertragen wird, versucht man im allgemeinen klein zu halten, da solche Reibungskräfte von unterschiedlichen Faktoren abhängig sind und sich im Laufe der Zeit auch leicht verändern können. Im wesentlichen wird also das Drehmoment nur über die Rückhaltefeder übertragen. Bei einem fest vorgegebenen Trägheitsmoment der Trägheitsklinke hängt dann der Grenz wert für die Winkelbeschleunigung, bei welcher die Trägheitsklinke aus ihrer Ruhelage herausschwenkt ausschließlich von der Stärke der Rückhaltefeder ab. Andererseits kann jedoch auch das Trägheitsmoment vergrößert oder verkleinert werden, um den erwähnten Grenzwert zu verkleinern bzw. zu vergrößern.

Weiterhin wird eine Ausführungsform der Erfindung bevorzugt, bei welcher die Trägheitsklinke bezüglich einer Ebene durch den Schwerpunkt symmetrisch ausgebildet ist.

Eine solche Ausbildung der Trägheitsklinke ermöglicht es zum einen, den Schwerpunkt relativ schnell und leicht festzustellen. Außerdem kann durch eine symmetrische Ausbildung der Klinke sowohl die Herstellung als auch die Montage weiter vereinfacht werden, da es beispielsweise beim Montieren auf die Orientierung einer im Schwerpunkt gelagerten, spiegelbildlich ausgebildeten Trägheitsklinke nicht ankommt.

Schließlich wird eine Ausführungsform der Erfindung bevorzugt, bei welcher ein Anschlag vorgesehen ist, an welchem die Trägheitsklinke in ihrer Ruheposition anliegt.

Eine Rückhaltefeder, welche die Trägheitsklinke in dieser Ruheposition hält, kann so unter einer gewissen Vorspannung stehen.

Weitere Vorteile, Merkmale und Anwendungsmöglichkeiten der vorliegenden Erfindung werden deutlich aus der folgenden Beschreibung bevorzugter Ausführungsformen und der dazugehörigen Figuren. Es zeigen:

Figur 1 eine symmetrische, im Schwerpunkt zu lagernde Trägheitsklinke,

Figur 2 eine Explosionsdarstellung der mit der Trägheitsklinke zusammenwirkenden Teile und

Figur 3 schematisch die Normallage und die verschwenkte Lage einer Trägheitsklinke auf einer Lagerscheibe mit Druckfeder und Anschlag.

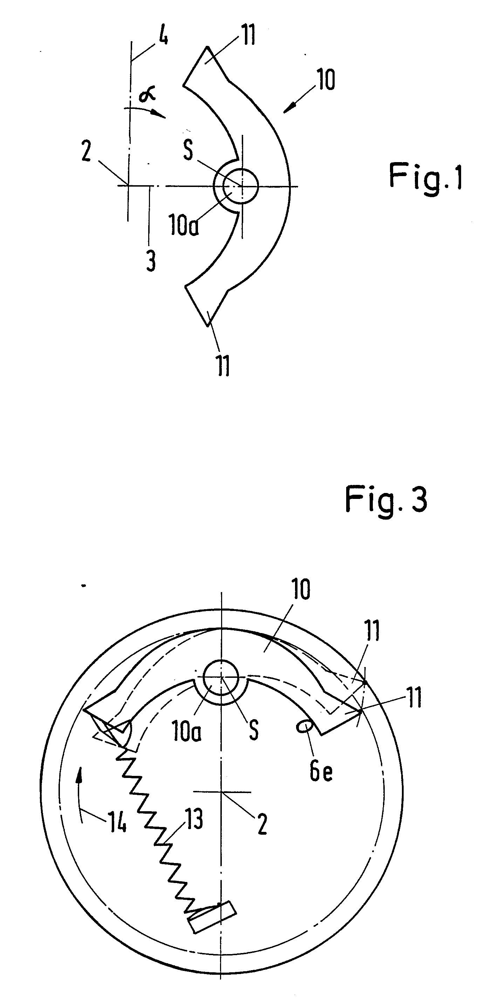

Die in Figur 1 dargestellte Trägheitsklinke 10 ist bezüglich einer Linie bzw. Ebene 4, welche durch den Schwerpunkt S verläuft, symmetrisch ausgebildet. Eine Bohrung 10a liegt konzentrisch zum Schwerpunkt S, so daß die Trägheitsklinke mit dieser Bohrung 10a auf einen Lagerzapfen 6e eines Steuerzahnrades aufgesetzt werden kann und damit bezüglich des Schwerpunktes drehbar gelagert ist. In ihrer äußeren Form paßt sich die Steuerklinke der in der Draufsicht im wesentlichen kreisförmigen Arretierantriebsscheibe an, so daß es nur einer geringen Verschwenkung der Trägheitsklinke 10 um ihren Schwerpunkt S bedarf, damit einer der Vorsprünge 11 in die Innenverzahnung 5d der Arretierantriebsscheibe 5 eingreift. Welcher der beiden Vorsprünge 11 mit der Innenverzahnung 5e der Arretierantriebsscheibe 5 in Eingriff kommt, hängt von der Drehrichtung und der Anbringung einer Rückhaltefeder ab. Grundsätzlich ist darauf zu achten, daß der beim Abwickeln des Gurtes vorne liegende Vorsprung 11 bei übermäßiger Gurtbandbeschleunigung von der Wickelachse 2, die als Kreuzungspunkt der Linien 3 und 4 dargestellt ist, nach außen geschwenkt wird und damit in die im wesentlichen konzentrisch zur Wickelachse 2 angeordnete Arretierantriebsscheibe 5 eingreift. Wegen der symmetrischen Ausbildung der Trägheitsklinke 10 kann diese auch um 180° bezüglich der Linie 4 gedreht werden, so daß die Rollen der beiden Vorsprünge 11 gerade vertauscht sind. Grundsätzlich kommt es für die Funktion der Trägheitsklinke 10 auf ihre äußere Form nicht an, jedoch ist zu beachten, daß bei gegebener Gesamtmasse der Trägheitsklinke ihr Trägheitsmoment umso größer ist, je mehr Masse in möglichst großem Abstand zum Schwerpunkt S angeordnet ist. Insofern haben die keulenförmig verdickten Enden der Klinke, welche zu Vorsprüngen 11 ausgeformt sind, auch die Funktion, das Trägheitsmoment der Trägheitsklinke 10 möglichst groß zu machen bzw. bei einem vorgegebenen, gewünschten Trägheitsmoment die Gesamtmasse der Trägheitsklinke 10 möglichst klein zu halten.

Wie bereits erwähnt, muß die Lagerung der Trägheitsklinke 10 nicht notwendigerweise im Schwerpunkt S erfolgen, jedoch erlaubt eine solche Lagerung eine bessere Übersicht über die auftretenden Drehmomente, so daß das Verhalten der Trägheitsklinke und damit ihre Dimensionierung und die Dimensionierung der Rückhaltefeder leichter vorausberechnet werden kann. Insbesondere kann man bei einer Lagerung im Schwerpunkt die auf die Klinke wirkenden Zentrifugalkräfte vernachlässigen, da sie insgesamt kein Drehmoment auf die Trägheitsklinke bewirken.

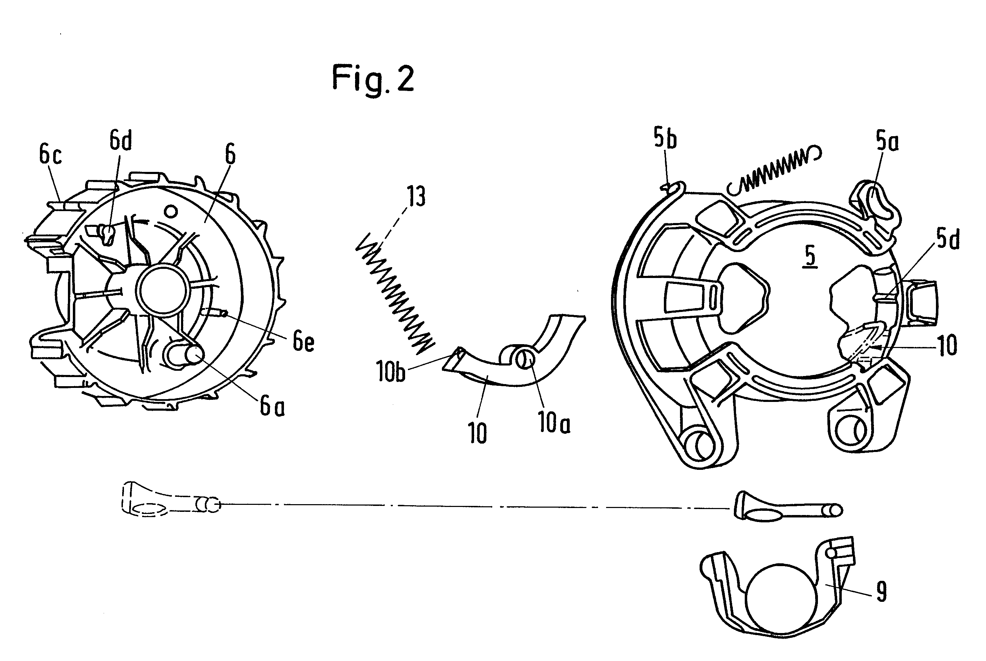

In Figur 2 erkennt man das Steuerzahnrad 6 mit dem Lagerzapfen 6a, welcher in die Bohrung 10a der Trägheitsklinke 10 eingreift. In ihrer Normalposition liegt die Trägheitsklinke 10 an dem Zapfen 6e des Steuerzahnrades 6 an. Damit die Trägheitsklinke 10 mit einer ihrer Vorsprünge 11 in die Innenverzahnung 5d der Arretierantriebsscheibe 5 eingreifen kann, muß die teilweise zylinderförmige Antriebsscheibe 5 entweder in das Innere des Steuerzahnrades 6 eingreifen, oder die Zapfen 6a und 6e des Steuerzahnrades müssen in axialer Richtung soweit aus dem Steuerzahnrad 6 hervorstehen, daß die Trägheitsklinke 10 in axialer Richtung außerhalb des Steuerzahnrades 6 liegend in die Innenverzahnung 5d der Arretierantriebsscheibe 5 eingreifen kann. Eine Rückhaltefeder 13 hält die Trägheitsklinke 10 in ihrer Ruheposition und überträgt bei kleineren Winkelbeschleunigungen das hierfür erforderliche Drehmoment von dem mit der Wickelwelle fest verbundenen Steuerzahnrad 6 auf die Trägheitsklinke 10. Die Reibung der Trägheitsklinke 10 auf dem Lagerzapfen 6a, durch welche grundsätzlich auch Drehmoment auf die Trägheitsklinke übertragen werden kann, wird durch eine leichte Spielpassung, die Auswahl der Materialien und/oder eine entsprechende Schmierung gering gehalten. Zusätzlich zu dem gurtbandsensitiven System, welches im wesentlichen aus der Trägheitsklinke 10 besteht, ist in Figur 2 auch das Trägheitssystem 9 dargestellt, welches auf lineare Beschleunigungskräfte anspricht und ebenfalls über eine Klinke eine Verbindung zwischen der Außenverzahnung des Steuerzahnrades 6 und der Arretierantriebsscheibe herstellt.

Die Verbindung zwischen Steuerzahnrad 6 und Arretierantriebsscheibe 5, welche demnach entweder über die Trägheitklinke 10 oder über den linearen Trägheitssensor 9 hergestellt wird, führt dazu, daß die Arretierantriebsscheibe 5, welche drehbar auf der Wickelwelle gelagert ist und sich im Normalfall nicht mit der Wickelwelle dreht, mitgedreht wird, so daß ein in die Steuerkurve 5a der Arretierantriebsscheibe eingreifender Zapfen einer Blockierklinke derart bewegt wird, daß die nicht dargestellte Blockierklinke in ein ebenfalls nicht dargestelltes Blokkierzahnrad eingreift und damit die weitere Drehung der Wickelwelle stoppt.

In Figur 3 ist nochmals schematisch dargestellt, wie die Trägheitsklinke 10 bei einer übermäßigen Winkelbeschleunigung der Wickelwelle aus ihrer Normallage bezüglich des Steuerzahnrades 6 bzw. bezüglich der Arretierantriebsscheibe 5 herausgeschwenkt wird, und mit ihrem Vorsprung 11 in die Innenverzahnung 5d der Arretierantriebsscheibe 5 eingreift.

In der in Figur 3 dargestellten Ausführungsform ist die Rückhaltefeder 13 eine Druckfeder, welche die Trägheitsklinke 10 gegen den Zapfen 6e, welcher als Anschlag für die Klinke 10 dient, andrückt. Die Spitzen der Vorsprünge 11 bewegen sich dann auf einem gemeinsamen Kreis mit einem Radius, welcher kleiner ist als der Radius der Innenverzahnung der Arretierantriebsscheibe. Erfolgt nun eine übermäßige Winkelbeschleunigung in Richtung des Pfeiles 14, so versucht die Trägheitsklinke 10 wegen des fundamentalen Drehimpulserhaltungsprinzips ihren jeweiligen Drehimpuls beizubehalten, d.h. sich mit derselben konstanten Winkelgeschwindigkeit um ihren eigenen Schwerpunkt zu drehen wie zuvor. Bei einer Drehung der Trägheitsklinke zusammen mit dem Steuerzahnrad kann man nämlich die Bewegung der Klinke zerlegen in eine Drehbewegung des Schwerpunktes S der Trägheitsklinke um die Wickelachse 2 und in eine Drehbewegung der Trägheitsklinke 10 um ihren Schwerpunkt S, mit jeweils der gleichen Winkelgeschwindigkeit. Bei einer Beschleunigung des Steuerzahnrades 6 wird zwangsweise über den Lagerzapfen 6a auch der Schwerpunkt der Trägheitsklinke 10 mitbeschleunigt. Auf die zweite Bewegungskomponente, d.h. auf die Drehung der Trägheitsklinke 10 selbst um ihren Schwerpunkt hat jedoch eine derartige Beschleunigung zunächst keinen Einfluß, wenn nicht Einrichtungen wie z.B. die Rückhaltefeder 13 zur Übertragung eines entsprechenden Drehmomentes vorgesehen sind.

Ist die Winkelbeschleunigung des Steuerzahnrades 6 so groß, daß die Kraft der Rückhaltefeder nicht ausreicht, um ein genügend großes Drehmoment auf die Trägheitsklinke 10 zu übertragen, so daß diese sich mit der gleichen Winkelbeschleunigung um ihren Schwerpunkt dreht wie ihr Schwerpunkt um die Wickelachse , so bleibt die Drehbewegung der Trägheitsklinke 10 um ihren Schwerpunkt S hinter der Drehbewegung des Steuerzahnrades zurück, und dies ist gleichbedeutend mit einer Verschwenkung der Trägheitsklinke 10 aus ihrer Ruhelage bezüglich des Steuerrades 6 in die gestrichelte Position und gegen die Wirkung der Feder 13.

Wie bereits erwähnt, kommt es auf die genaue Form der Trägheitsklinke 10 nicht an, sondern lediglich auf ihr Trägheitsmoment. Bei einer Lagerung im Schwerpunkt der Trägheitsklinke würde eine Form mit maximalem Trägheitsmoment so aussehen, daß der Großteil der Masse im Bereich der Vorsprünge 11 konzentriert ist, während die Bereiche in der Nähe des Schwerpunktes S gerade soviel Masse enthalten, daß eine ausreichende Stabilität der Trägheitsklinke 10 gewährleistet ist. Andererseits ist jedoch auch zu beachten, daß die Kraftübertragung zwischen Steuerzahn rad 6 und Arretierantriebsscheibe 5 möglichst in annähernd tangentialer Richtung erfolgen sollte, um radiale Kräfte und ein Verklemmen der Trägheitsklinke 10 zwischen Steuerzahnrad und Arretierantriebsscheibe zu verhindern. Aus diesem Grunde sollte der Lagerzapfen 6a möglichst weit von der Wickelachse 2 entfernt liegen, so daß, um eine Lagerung der Trägheitsklinke 10 im Schwerpunkt zu gewährleisten, auch genügend Masse auf der vom Lagerzapfen aus gesehen der Wickelachse 2 gegenüberliegenden Seite der Trägheitsklinke 10 entsprechend Masse vorhanden sein muß. Die Berücksichtigung beider Bedingungen führt zu der in den Figuren dargestellten, weitgehend optimierten Ausführungsform einer Trägheitsklinke.

## Ansprüche

1. Gurtbandsensitives System für Gurtaufrollschnellsperrautomaten, welche im wesentlichen eine Wickelwelle mit aufgewickeltem Gurtband, eine beweglich angeordnete Blockierklinke mit einem Blockierzahnrad und ein konzentrisch zur Wickelachse (2) gelagertes Steuerteil mit einer um die Wickelachse (2) frei drehbaren Arretierantriebsscheibe (5) mit Innenverzahnung (5d) aufweisen, wobei das gurtbandsensitive System aus einer im Abstand zur Wickelachse (2) drehbar gelagerten Klinke und einer die Klinke bei übermäßiger Gurtbandbeschleunigung auslenkenden Drehträgheitsmasse besteht, **dadurch gekennzeichnet,** daß die Klinke eine mit der Drehträgheitsmasse fest verbundene Trägheitsklinke (10) ist.

2. Gurtbandsensitives System nach Anspruch 1, **dadurch gekennzeichnet,** daß die Trägheitsklinke (10) durch eine Rückhaltefeder (11) in ihrer normalen Position gehalten wird.

3. Gurtbandsensitives System nach Anspruch 2, **dadurch gekennzeichnet,** daß die Rückhaltefeder eine Spiralfeder ist

4. Gurtbandsensitives System nach einem der Ansprüche 1 bis 3, **dadurch gekennzeichnet,** daß die Trägheitsklinke (10) auf einem mit der Wickelwelle drehfest verbundenen Steuerzahnrad (6) mit Außenverzahnung (6c) gelagert ist.

5. Gurtbandsensitives System nach einem der Ansprüche 1 bis 4, **dadurch gekennzeichnet,** daß die Trägheitsklinke (10) mit der Druckträgheitsmasse einstückig ausgebildet ist.

6. Gurtbandsensitives System nach einem der Ansprüche 1 bis 5, **dadurch gekennzeichnet,** daß die Trägheitsklinke außerhalb ihres Schwerpunktes drehbar gelagert ist und daß in Abwickelrichtung gesehen der Schwerpunkt vor dem Drehpunkt liegt und einen größeren Abstand zur Wickelachse (2) hat als der Drehpunkt.

7. Gurtbandsensitives System nach einem der Ansprüche 1 bis 5, **dadurch gekennzeichnet,** daß die Trägheitsklinke (10) um ihren Schwerpunkt (1) leicht drehbar gelagert ist.

8. Gurtbandsensitives System nach einem der Ansprüche 1 bis 7, **dadurch gekennzeichnet,** daß die Trägheitsklinke (10) bezüglich einer Ebene durch den Schwerpunkt (1) symmetrisch ausgebildet ist.

9. Gurtbandsensitives System nach einem der Ansprüche 1 bis 8, **dadurch gekennzeichnet,** daß ein Anschlag (6e) vorgesehen ist, an welchem die Trägheitsklinke (10) unter der Wirkung eines Rückhaltesystems im Ruhezustand anliegt.

Fig.1

Fig. 3

Fig.2

Europäisches
Patentamt

**EUROPÄISCHER RECHERCHENBERICHT**

Nummer der Anmeldung

EP 87 11 3952

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 941 330 (ULRICH) <br> * Spalte 3, Zeile 34 - Spalte 4, Zeile 40 * | 1-3,5,7 ,9 | B 60 R 22/38 |
| A | | 4 | |
| | ----- | | |

**RECHERCHIERTE SACHGEBIETE (Int. Cl.4)**

B 60 R 22/00

Der vorliegende Recherchenbericht wurde für alle Patentansprüche erstellt

| Recherchenort | Abschlußdatum der Recherche | Prüfer |
|---|---|---|
| BERLIN | 13-01-1988 | STANDRING M A |